# EUROPÄISCHE PATENTANMELDUNG

(11) **EP 0 716 519 A1**
(43) Veröffentlichungstag der Anmeldung: **12.06.1996**
(21) Anmeldenummer: 95116784.0
(22) Anmeldetag: 25.10.1995
(51) Int. Cl.: H04J 3/06

(54) **Verfahren und Anordnung zum Austausch von Daten über eine Übertragungseinheit mit einem Pufferspeicher und Taktrückgewinnung**

(30) Priorität: 05.12.1994 CH 3677/94
(71) Anmelder: Siemens Schweiz AG, CH-8047 Zürich (CH)
(72) Erfinder: Wenger, Bruno, CH-8804 Au / ZH (CH)

(57) **Zusammenfassung**

Eine Übertragungseinheit, über die Daten zwischen zwei Kommunikationseinheiten ausgetauscht werden, besteht im wesentlichen aus einer Taktregenerierschaltung (DPLL), einem Oszillator (V) und einer Schalteinheit (SE) mit einem Pufferspeicher (PS), die mit einem ankommenden Datenstrom (DAI) und einem abgehenden Datenstrom (DAO) verbunden ist. Das erfindungsgemässe Verfahren besteht darin, dass mit Hilfe der Taktregenerierschaltung (DPLL) aus dem ankommenden Datenstrom (DAI) ein Schreibtakt (FI) zum Einlesen von Daten des ankommenden Datenstroms (DAI) in den Pufferspeicher (PS) erzeugt wird. Ferner wird mit Hilfe des Oszillators (V) ein Lesetakt (FO) zum Lesen der im Pufferspeicher (PS) gespeicherten Daten zur Bildung des abgehenden Datenstroms (DAO) erzeugt. Schliesslich wird der Lesetakt (FO) zudem als Referenzfrequenz in der Taktregenerierschaltung (DPLL) verwendet.

## Beschreibung

Die vorliegende Erfindung betrifft ein Verfahren nach dem Oberbegriff des Patentanspruchs 1 sowie eine Schaltungsanordnung nach dem Oberbegriff des Patentanspruchs 5.

Der Verbund von verschiedenen digitalen Fernmeldenetzen setzt für einem einwandfreien Betrieb zwischen Teilnehmern der beteiligten Fernmeldenetze nicht nur eine identische Signalisierung voraus, sondern bedingt auch, dass die Taktfrequenzen in den Fernmeidenetzen im wesentlichen übereinstimmen und zudem eine vorgegebene Stabilität aufweisen. Aus diesem Grund werden an der Schnittstelle zwischen den beiden Fernmeldenetzen Übertragungseinheiten vorgesehen, die eingangsseitig eine hohe Jitterverträglichkeit aufweisen, damit ein ankommender Datenstrom mit stark schwankender Taktrate fehlerfrei in der Übertragungseinheit empfangen werden kann. Auf der Sendeseite dieser Übertragungseinheiten wird andererseits ein möglichst jitterfreier abgehender Datenstrom angestrebt, um eine möglichst hohe Übertragungssicherheit bei der Weiterverbreitung der Daten gewährleisten zu können.

Eine bekannte Übertragungseinheit ist in der europäischen Patentanmeldung EP-0 572 367 A1 beschrieben, wobei in dieser Druckschrift eine Übertragungseinheit angegeben ist, bei der sendeseitig ein Taktsignal zur Verfügung steht, das der Taktrate des ankommenden Datenstroms inklusive allfälligem Jitter entspricht und das direkt zum Einlesen der Daten in einen in der Übertragungseinheit enthaltenen Pufferspeicher verwendet wird. Ausgangsseitig steuert ein Phasenregelkreis (PLL - Phase Locked Loop) das Auslesen der Daten zur Bildung des abgehenden Datenstroms aus dem Pufferspeicher, wobei diese Taktrate einerseits von der im Pufferspeicher vorhandenen Datenmenge abhängig ist, anderseits in einem vorgegebenen Frequenztoleranzbereich liegen muss.

Falls die Taktrate des ankommenden Datenstroms nicht verfügbar ist, so muss mit Hilfe einer Taktregenerierschaltung die Taktrate des ankommenden Datenstroms rekonstruiert werden (DE-32 34 576 A1). Dies kann beispielsweise mit einem digitalen Phasenregelkreis durchgeführt werden, womit die Übertragungseinheit neben einem zweiten Phasenregelkreis auch einen zweiten Oszillator aufweisen muss. Gerade diese zusätzlichen Schaltkreise stellen erhöhte Anforderungen und verursachen insbesondere weitere Kosten bei einer Gesamtintegration der Schaltung einer Übertragungseinheit.

Der vorliegenden Erfindung liegt daher die Aufgabe zugrunde, eine Übertragungseinheit anzugeben, die einfacher und wesentlich kostengünstiger realisiert werden kann.

Diese Aufgabe wird durch die im kennzeichnenden Teil des Patentanspruchs 1 angegebenen Massnahmen gelöst. Vorteilhafte Ausgestaltungen der Erfindung sowie eine Schaltungsanordnung sind in weiteren Ansprüchen angegeben.

Die Erfindung weist folgende Vorteile auf: Indem die ausgangsseitig Taktrate der Übertragungseinheit als Referenzfrequenz für die eingangsseitige Taktregenerierschaltung verwendet wird, entfällt gegenüber der bekannten Übertragungseinheit ein Oszillator, was zu erheblichen Einsparungen bei der Realisierung einer Schaltung für die Übertragungseinheit und damit zu weiteren Kostenreduktionen führt.

Die Erfindung wird nachfolgend anhand von Zeichnungen beispielsweise näher erläutert. Dabei zeigt
- Fig. 1: eine bekannte Übertragungseinheit,
- Fig. 2: eine erfindungsgemässe Übertragungseinheit und
- Fig. 3: eine weitere Ausführungsform der erfindungsgemässen Übertragungseinheit.

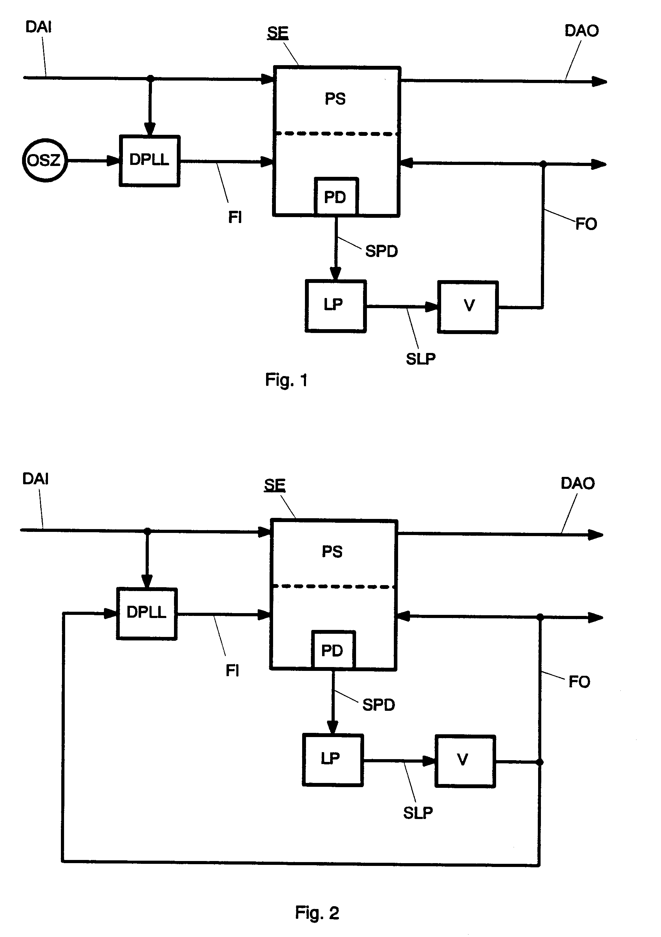

Fig. 1 zeigt eine bekannte Übertragungseinheit mit einer Taktregenerierschaltung DPLL, einem Festwertoszillator OSZ, einem gesteuerten Oszillator V, einem Schleifenfilter LP und einer Schalteinheit SE, die im wesentlichen aus einem Pufferspeicher PS und einem Phasendiskriminator PD besteht. Die Schalteinheit SE bzw. der Pufferspeicher PS wird dabei eingangsseitig mit einem ankommenden Datenstrom DAI beaufschlagt, der gleichzeitig der Taktregenerierschaltung DPLL zugeführt wird. Als weiteres Eingangssignal wird der Taktregenerierschaltung DPLL eine im Festwertoszillator OSZ erzeugte Referenzfrequenz zugeführt, die zusammen mit der Übertragungsrate des ankommenden Datenstroms DAI zur Erzeugung eines Schreibtaktes FI verwendet wird, mit dem die Daten des ankommenden Datenstromes DAI in den Pufferspeicher PS geschrieben werden.

Die Taktregenerierschaltung DPLL ist vorzugsweise als digitaler Phasenregelkreis realisiert. Eine mögliche Ausführungsform kann der deutschen Offenlegungsschrift DE- 32 34 576 A1 entnommen werden.

Ausgangsseitig der Übertragungseinheit ist ein abgehender Datenstrom DAO und ein Lesetakt FO vorgesehen, der der Datenübertragungsrate des abgehenden Datenstroms DAO entspricht und der der Schalteinheit SE zum Lesen der Daten aus dem Pufferspeicher PS zugeführt wird. Erzeugt wird der Lesetakt FO in einem weiteren Phasenregelkreis, der aus dem Schleifenfilter LP, dem gesteuerten Oszillator V und dem in der Schalteinheit SE enthaltenen Phasendiskriminator PD besteht. Weiterführende Angaben über diesen Phasenregelkreis können beispielsweise den Druckschriften EP-0 572 367 A1 und EP-0 204 894 B1 entnommen werden.

Wegen der auf der Empfangsseite der Übertragungseinheit geforderten hohen Jitterverträglichkeit weist der Phasenregelkreis der Taktregenerierschaltung DPLL eine geringe Güte (U. Tietze und Ch. Schenk, "Halbleiterschaltungstechnik", Springer Verlag, 6. Auflage, Seite 22) auf, womit der Schreibtakt FI mit dem gleichen Jitter behaftet ist, wie der kommende Datenstrom DAI. Somit werden die Daten des kommenden Datenstroms DAI fehlerfrei in den Pufferspeicher PS der Schalteinheit SE gelesen.

Am Ausgang der Übertragungseinheit sind die mit dem Lesetakt FO aus dem Pufferspeicher PS gelesenen Daten im gehenden Datenstrom DAO zusammen mit dem Lesetakt FO verfügbar. Der Lesetakt FO ist dabei entsprechend der für diesen Phasenregelkreis gewählten Güte jitterfrei.

Wie erwähnt, besteht die Taktregenerierschaltung DPLL vorzugsweise aus einem digitalen Phasenregelkreis, der allerdings eine externe Referenzfrequenz benötigt. Somit weist die bekannte Übertragungseinheit insgesamt zwei Phasenregelkreise und zwei Oszillatoren auf, was erhebliche Kosten und einen entsprechenden Platzbedarf bei der Schaltungsrealisierung der Übertragungseinheit hervorruft.

In Fig. 2 ist die erfindungsgemässe Übertragungseinheit dargestellt, die sich von der in Fig. 1 dargestellten bekannten Übertragungseinheit dadurch unterscheidet, dass als Referenzfrequenz für die Taktregenerierschaltung DPLL der Lesetakt FO des Oszillators V verwendet wird. Damit ist der in der bekannten Lehre gemäss den Erläuterungen zu Fig. 1 verwendete Festwertoszillator OSZ nicht mehr notwendig, was zu entsprechenden Kosteneinsparungen durch den kleineren notwendigen Schaltungsaufwand für die gesamte Übertragungseinheit führt, denn für eine Gesamtintegration der Schaltung der Übertragungseinheit ist eine kleinere Schaltungsfläche notwendig.

Durch die Rückführung des Lesetaktes FO in die eingangsseitige Taktregenerierschaltung DPLL entstehen zwei ineinander verschachtelte Regelsysteme, die bei ungünstiger Wahl ihrer Parameter instabil sein können. Ist die Zeitkonstante (U. Tietze und Ch. Schenk, "Halbleiterschaltungstechnik", Springer Verlage, 6. Auflage, Seiten 11 und 15) des Phasenregelkreises der Taktregenerierschaltung DPLL jedoch wesentlich kleiner als diejenige des ausgangsseitigen Phasenregelkreises, so ist die Übertragungseinheit stabil. Der ausgangsseitige Phasenregelkreis weist somit eine höhere Güte auf als der Phasenregelkreis der Taktregenerierschaltung DPLL.

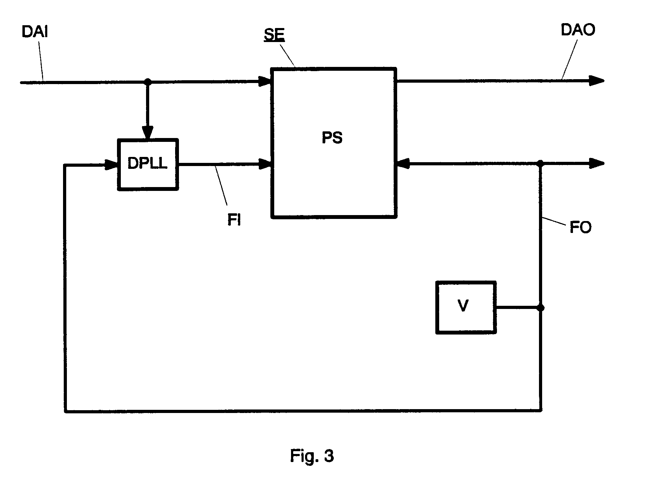

Fig. 3. zeigt eine weitere Ausführungsform der erfindungsgemässen Übertragungseinheit. Bei dieser ist der Lesetakt FO zur Bildung des abgehenden Datenstroms DAO auf einen vorgegebenen Frequenzwert festgelegt, der direkt vom Oszillator V stammt, der in dieser Ausführungsform ein Festwertoszillator ist. Ausgangsseitig ist diese Übertragungseinheit bezüglich der Übertragungsfrequenz starr, da keine Regelung des Oszillators V vorgenommen wird. In dieser Ausführungsform der Übertragungseinheit ist demzufolge weder ein Phasendiskriminator PD (Fig. 2) in der Schalteinheit SE noch ein Schleifenfilter LP (Fig. 2) notwendig.

Eingangsseitig bleibt die genaue Nachbildung eines Schreibtaktes FI, wie bereits anhand Fig. 2 erläutert, zum Einlesen des ankommenden Datenstroms DAI In den Pufferspeicher PS der Schalteinheit SE erhalten. Als Referenzfrequenz wird auch In dieser Ausführungsform der Lesetakt FO des Oszillators V verwendet.

Die in Fig. 3 dargestellte Schaltungsanordnung kann in einem bekannten PDH-(Plesiochronous Digital Hierarchy)-Multiplexer verwendet werden, bei dem die ankommenden Daten in einen rahmenstrukturierten abgehenden Datenstrom verpackt werden. Die Übertragungsrate des abgehenden Datenstromes ist daher geringfügig höher als diejenige des ankommenden Datenstromes. Frei werdende Bits werden mit sogenannten "Ieeren" Stopfbits aufgefüllt.

## Patentansprüche

1. Verfahren zum Austauschen von Daten zwischen zwei Kommunikationseinheiten über eine Übertragungseinheit, die eine Taktregenerierschaltung (DPLL), einen Oszillator (V) und eine Schalteinheit (SE) mit einem Pufferspeicher (PS) aufweist, die mit einem ankommenden Datenstrom (DAI) und einem abgehenden Datenstrom (DAO) verbunden ist, wobei das Verfahren darin besteht,
dass mit Hilfe der Taktregenerierschaltung (DPLL) aus dem ankommenden Datenstrom (DAI) ein Schreibtakt (FI) zum Einlesen von Daten des ankommenden Datenstroms (DAI) in den Pufferspeicher (PS) erzeugt wird,
dass mit Hilfe des Oszillators (V) ein Lesetakt (FO) zum Lesen der im Pufferspeicher (PS) gespeicherten Daten zur Bildung des abgehenden Datenstroms (DAO) erzeugt wird und
dass der Lesetakt (FO) zudem als Referenzfrequerz in der Taktregenerierschaltung (DPLL) verwendet wird.

2. Verfahren nach Anspruch 1, **dadurch gekennzeichnet**, dass die Taktregenerierschaltung (DPLL) ein digitaler Phasenregelkreis ist.

3. Verfahren nach Anspruch 1 oder 2, **dadurch gekennzeichnet**, dass der Lesetakt (FO) zum Lesen der Daten des Pufferspeichers (PS) in einem weiteren Phasenregelkreis, bestehend aus einem in der Schalteinheit (SE) enthaltenen Phasendiskriminator (PD), einem Schleifenfilter (LP) und dem Oszillator (V), erzeugt wird.

4. Verfahren nach Anspruch 3, **dadurch gekennzeichnet**, dass der digitale Phasenregelkreis der Taktregenerierschaltung (DPLL) eine Zeitkonstante aufweist, die verglichen mit derjenigen des weiteren Phasenregelkreises wesentlich kleiner ist.

5. Schaltungsanordnung zum Austauschen von Daten zwischen zwei Kommunikationseinheiten, bestehend aus einer Schalteinheit (SE) mit einem Pufferspeicher (PS), einer Taktregenerierschaltung (DPLL) und einem Oszillator (V), wobei die Taktregenerierschaltung (DPLL) und die Schalteinheit (SE) mit einem ankommenden Datenstrom (DAI) und letztere zudem mit einem im Oszillator (V) erzeugten Lesetakt (FO) beaufschlagt sind, der zusammen mit einem durch die Schalteinheit (SE) abgegebenen abgehenden Datenstrom (DAO) Eingangssignale der empfangenden Kommunikationseinheit bildet, **dadurch gekennzeichnet**, dass die Taktregenerierschaltung (DPLL) mit dem Lesetakt (FO) beaufschlagt ist.

6. Schaltungsanordnung nach Anspruch 5, **dadurch gekennzeichnet**, dass die Taktregenerierschaltung (DPLL) ein digitaler Phasenregelkreis ist.

7. Schaltungsanordnung nach Anspruch 5 oder 6, **dadurch gekennzeichnet**, dass ein weiterer Phasenregelkreis vorgesehen ist, der aus einem in der Schalteinheit (SE) enthaltenen Phasendiskriminator (PD), einem Schleifenfilter (LP) und dem Oszillator (V) besteht, wobei der Ausgang des in der Schalteinheit (SE) enthaltenen Phasendiskriminators (PD) über das Schleifenfilter (LP) mit dem Oszillator (V) verbunden ist.

8. Schaltungsanordnung nach Anspruch 7, **dadurch gekennzeichnet**, dass der digitale Phasenregelkreis der Taktregenerierschaltung (DPLL) eine Zeitkonstante aufweist, die verglichen mit derjenigen des weiteren Phasenregelkreises wesentlich kleiner ist.
